# EUROPEAN PATENT APPLICATION

(11) **EP 0 926 678 A2**
(43) Date of publication of application: **30.06.1999**
(21) Application number: 98310040.5
(22) Date of filing: 08.12.1998
(51) Int. Cl.: G11B 27/031

(54) **Method and apparatus for compressed video segment cut-and-concatenation for editing**

(30) Priority: 17.12.1997 US 992684
(71) Applicant: TEKTRONIX, INC., Wilsonville, Oregon 97070-1000 (US)
(72) Inventor: Cen, Shanwei, Aloha, Oregon 97006 (US); Brunner, Theodore O., Portland, Oregon 97210 (US)
(74) Representative: Molyneaux, Martyn William

(57) **Abstract**

A method and apparatus for compressed video segment cut and concatenation for editing uses a re-encoder (9), controller (11), ancillary storage (15), and a single decoder (13). Video segments from video clips stored on a server are chosen for playback in a specific order. References to the frames of the chosen sequence are stored by use of index pointers in ancillary storage and P or B frames near the cut points between segments are re-encoded to I frames for future insertion and re-ordered in storage for forward or reverse playback of the selected sequence by a single decoder.

## Description

The present invention relates in general to digital video, and more particularly to motion-prediction compressed digital video segment cut and concatenation for editing.

An example of a compression scheme using motion prediction is the Moving Picture Expert Group (MPEG) compression standard. MPEG (ISO/IEC 11172-2 and 13818-2) uses motion prediction techniques to reach a high compression ratio. A compressed MPEG video stream consists of a sequence of I, P, and B frames. An independent (I) frame is self contained, containing no motion prediction, while a predictive (P or B) frame is a difference between the current frame and future or past reference frame(s). Due to motion prediction, MPEG video has the advantage of a lower bandwidth (bit-rate) requirement than other compression schemes such as the Joint Photographic Expert Group (JPEG) standard. On the other hand, motion prediction makes MPEG video more complicated during editing. MPEG video does not support editing well, due to difficulties with variable speed, forward and backward play, frame-accurate random access, and frame-accurate cut-in and cut-out.

Two components can be identified in a video editing system: a video media storage server and an editor. The media storage server contains source video clips, which are immutable during editing. The editor is used to browse video clips from the media storage server, identify segments from the source clips, and construct edit-decision-lists (EDL's) referencing the identified segments. It is necessary for the editor to be able to play EDL's as composite video clips, so that the effect of the EDL's can be viewed. The editor needs to smoothly play across the cut-in and cut-out points, backward and forward.

When attempting to play across the cut points, it is not sufficient to simply cut the segments out of the source video clips, on frame boundaries, and concatenate the segments together. Some P or B frames close to the cut-in and cut-out points, which are necessary for play, are non-decodable, since their reference frames are missing from the segment.

A current method of re-encoding P and B frames close to the cut point exists, but it is expensive because it requires two decoders, and is limited because it does not provide for reverse playback.

What is desired is an inexpensive motion-prediction compressed video editing system that enables the editor to smoothly play forward and reverse across the cut-in and cut-out points that does not require multiple decoders.

### Summary of the Invention

In accordance with the illustrated preferred embodiment of the invention, a method and apparatus is disclosed to cut motion-prediction compressed source video clips into segments, and concatenate them for smooth playback across cut-in and cut-out points. Whenever a video segment is identified, the otherwise non-decodable P and B frames within it at cut-in and cut-out points are decoded and re-encoded into I frames. The re-encoded I frames as well as other data structures which associate the original and re-encoded frames and identify frames within the segments are stored in ancillary storage inside the editor. During playback of an EDL, the data structures are consulted to determine which frames to play, and whether the original frames or the re-encoded frames should be used. Smooth playback of EDL's across the cut-in and cut-out points is provided, while using a single MPEG decoder and storing the source video clips in a media storage server unchanged.

The objects, advantages, and other novel features of the present invention are apparent from the following detailed description when read in conjunction with the appended claims and attached drawing.

### Brief Description of the Drawing

Fig. 1 is a block diagrammatic view of a video editing system according to the present invention.
Fig. 2 is a block diagrammatic view of a motion-prediction compressed video editor according to the present invention.
Fig. 3 is a table showing examples of how frames are re-encoded near an editing cut point according to the present invention.

### Description of the Preferred Embodiment

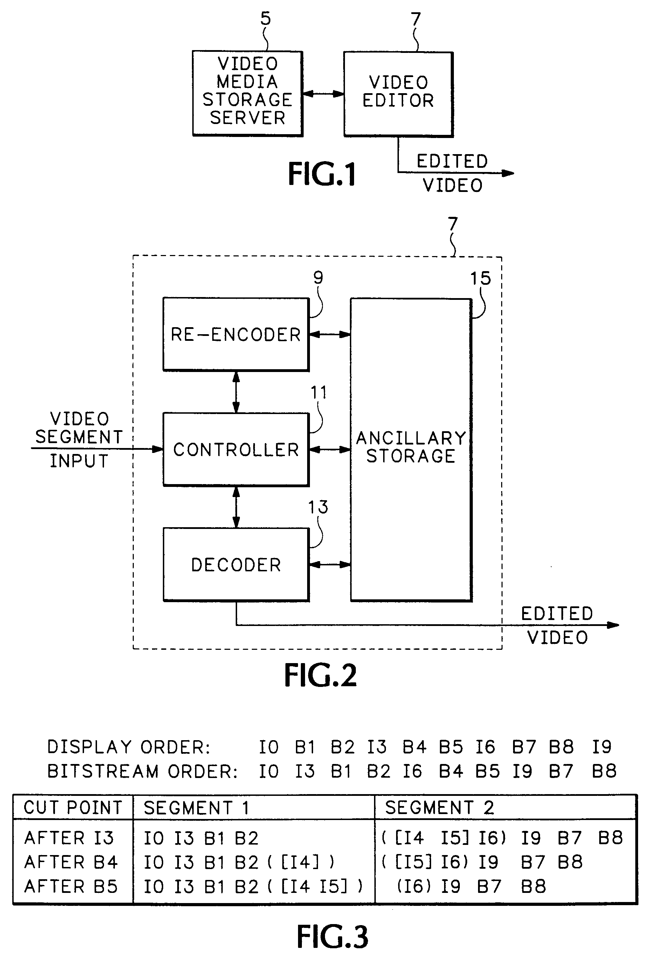

Referring to Fig. 1, a motion-prediction compressed video editing system has a video media storage device **5** for storage and output of various source video clips coupled to an editor **7**. The editor cuts and concatenates segments from the source video clips and then outputs the resultant video stream in forward or reverse directions and at variable speed without changing the source video resident on the video media storage server **5**.

Referring to Fig. 2, a more detailed diagram of the editor **7** of Fig. 1 is shown. As video from the video media storage server **5** is input to a controller **11**, the segments chosen are identified and referenced on an edit decision list (EDL) to be played by the editor as a composite video clip. The EDL, as well as index pointers to the frames in the segments identified on the EDL, are stored in ancillary storage **15** which is coupled to the controller **11**. The source material resident in the video media storage server **5** remains unchanged.

As each segment chosen is identified, the otherwise non-decodable P and B frames within it at the beginning and end of the identified segment are decoded by a de-coder **13** and re-encoded, using information from the adjacent frames, into I frames by a re-encoder **9**. The decoder **13** and reencoder **9** are both coupled to the controller **11** and ancillary storage **15**. The re-encoded I frames, which can now be independently decoded are placed in the ancillary storage **15**. The association between the re-encoded I frames and their original version is stored in the ancillary storage **15** for future reference. These re-encoded I frames, and if necessary, some existing I frames adjacent and close to the re-encoded I frames are then re-ordered. This is done by updating the index pointers to the frames in the segments stored in ancillary storage **15**. In this way, the segments are made self-contained for playback in both directions and at variable speed. Also, the frames at the end and beginning of each identified segment (cut points) can be crossed backward and forward smoothly. The process for reverse playback is addressed and disclosed further in patent application 6207 US.

Which P and B frames to re-encode around a cut point and which frames surrounding them to re-order depend on the types of frames around the cut points. To help explain how the re-encoded frames and those surrounding them are re-ordered according to the present invention, several examples of P and B frame re-encoding and the re-ordering of frames surrounding them are given in Fig. 3. The display order and bitstream order of an example video clip that is present on the video media storage server 5 is given in Fig. 3. Cutting the clip in the middle results in two identified segments. The first with a cut-out point, and the second with a cut-in point. In the three typical cases of cutting after I3, B4, and B5 (in display order), and after re-encoding of the otherwise non-decodable B frames, the result is the order of frames listed in the table shown in Fig. 3. The segment frames in the table are shown in bitstream order. The frames in [] represent re-encoded I frames and the frames in () represent the re-ordered frames.

The video segments thus far identified on the EDL are then played back. By use of the controller **11**, the editor examines the index pointers stored in ancillary storage **15** corresponding to the video segments identified on the EDL and decodes those frames indexed by use of the decoder **13** for display. If a frame is found to have been stored in ancillary storage **15** as a re-encoded I frame, that re-encoded version is then decoded by decoder **13**, and displayed instead of the original one.

Playback of an EDL can either be held back until all the otherwise non-decodable P and B frames are re-encoded, or can happen in parallel with the re-encoding process, as long as the unfinished cut points are not played. This is effected by the controller **11**. The held-back method of the preferred embodiment, however, imposes no meaningful restriction on the responsiveness of the editor **7**. The inherent operational delay of the operator needing time to move a mouse and/or press buttons after each segment is identified is enough to allow the re-encoding process to complete. This is because the re-encoding process is simple and quick since at each cut point only a few P and B frames need to be re-encoded into I frames and no time consuming motion prediction is involved.

Thus the present invention provides an inexpensive motion-prediction compressed video editing system that enables the editor to smoothly play forward and reverse across the cut-in and cut-out points that does not require multiple decoders. Additions, deletions, and other modifications of the disclosed particular embodiments of the invention will be apparent to those in the art and are within the scope of the following claims.

## Claims

1. A method for compressed video segment cut and concatenation for editing comprising the steps of:
choosing video segments from stored video clips for composite playback in specific order;
storing references to frames of the chosen video segments;
re-encoding compressed predictive frames at cut points between the chosen video segments to decodable compressed independent frames;
decoding sequentially for playback the frames of the chosen segments according to the stored frame references by using a single decoder;
substituting the re-encoded compressed independent frames for the compressed predictive frames as each cut point between the chosen segments is encountered during the sequential decoding.

2. The method according to claim 1, further comprising the step of updating the stored references to the frames of the chosen segments to effect a re-ordering of the re-encoded compressed independent frames and other frames close to the cut points between the chosen segments such that the chosen segments are made self contained for forward and reverse playback.

3. The method according to claim 1 or 2 further comprising the step of starting the decoding step before all the compressed predictive frames at cut points between all the chosen segments are re-encoded into compressed independent frames.

4. An apparatus for compressed video segment cut and concatenation for editing comprising:
means for choosing video segments from stored video clips for composite playback in specific order;
means for storing references to frames of the chosen video segments;
means for re-encoding compressed predictive frames at cut points between the chosen segments to decodable compressed independent frames;
a single decoder for decoding sequentially for playback the frames of the chosen segments according to the stored frame references;
means for substituting the re-encoded compressed independent frames for the compressed independent frames as each cut point between the chosen segments is encountered during the sequential decoding.

5. The apparatus of claim 4, further comprising means for updating the stored references to the frames of the chosen segments to effect a re-ordering of the re-encoded compressed independent frames and other frames close to the cut points between the chosen segments such that the chosen segments are made self contained for forward and reverse playback.

6. The apparatus of claim 4 or 5 further comprising means for starting the decoding step before all the compressed predictive frames at cut points between all the chosen segments are re-encoded into compressed independent frames.

7. A compressed video editing system comprising:
a video media storage server;
a controller coupled to the server, operative for reading video clips from the video media storage server, choosing video segments from the video clips for playback, re-ordering frames within those video segments to enable playback, and signaling decode, encode and storage commands with respect to those video segments;
a re-encoder coupled to the controller, operative for re-encoding compressed predictive frames into compressed independent frames at chosen cut points;
ancillary storage coupled to the re-encoder and controller, operative for storing the re-encoded compressed independent frames and references to chosen video segment frames for playback;
a single decoder coupled to the ancillary storage and controller, operative for decoding and playing back prediction-compressed video streams in real time according to the stored references to the chosen video segment frames and re-encoded compressed independent frames.
